# EUROPÄISCHE PATENTSCHRIFT

(11) **EP 3 256 715 B1**
(45) Veröffentlichungstag und Bekanntmachung des Hinweises auf die Patenterteilung: **11.08.2021**
(21) Anmeldenummer: 16703434.7
(22) Anmeldetag: 08.02.2016
(51) Int. Cl.: F02M 65/00, F02M 63/02, F02M 59/46, F02M 55/02, F02M 37/00

(54) **KRAFTSTOFFVERSORGUNGSANLAGE EINER BRENNKRAFTMASCHINE**
FUEL SUPPLY UNIT FOR AN INTERNAL COMBUSTION ENGINE
SYSTÈME D'ALIMENTATION EN CARBURANT D'UN MOTEUR À COMBUSTION INTERNE

(30) Priorität: 10.02.2015 DE 102015001607
(43) Veröffentlichungstag der Anmeldung: 20.12.2017
(73) Patentinhaber: MAN Energy Solutions SE, 86153 Augsburg (DE)
(72) Erfinder: MEIER, Robert, 86477 Adelsried (DE); GRITZKO, Torsten, 86444 Affing (DE)
(86) Internationale Anmeldenummer: PCT/EP2016/000203
(87) Internationale Veröffentlichungsnummer: WO 2016/128126

(56) Entgegenhaltungen:
- EP-A1- 2 942 517
- DE-A1-102011 004 378
- DE-A1-102012 105 818
- DE-A1-102012 107 596
- DE-A1-102014 006 995

## Beschreibung

Die Erfindung betrifft eine Kraftstoffversorgungsanlage einer Brennkraftmaschine nach dem Oberbegriff des Anspruchs 1. Des Weiteren betrifft die Erfindung ein Verfahren zum Betreiben dieser Brennkraftmaschine.

Der grundsätzliche Aufbau einer als Common-Rail-Kraftstoffversorgungsanlage ausgebildeten Kraftstoffversorgungsanlage einer mit Schweröl betriebenen Schiffsdieselbrennkraftmaschine ist aus der EP 1 314 883 A2 bekannt. So verfügt die aus diesem Stand der Technik bekannte Kraftstoffversorgungsanlage über eine Niederdruckpumpe, mit Hilfe derer Kraftstoff in einen Niederdruckbereich der Kraftstoffversorgungsanlage gefördert werden kann. Ferner umfasst die aus diesem Stand der Technik benannte Kraftstoffversorgungsanlage mehrere Hochdruckpumpen, um Kraftstoff von dem Niederdruckbereich in einen Hochdruckbereich der Kraftstoffversorgungsanlage zu fördern. Bei den Hochdruckpumpen handelt es sich um parallel geschaltete Kraftstoffpumpen eines Druckregelkreises, nämlich des Hochdruckbereichs, der Kraftstoffversorgungsanlage. Über die Hochdruckpumpen kann der Kraftstoff einem permanent unter Hochdruck stehenden Druckspeichersystem bereitgestellt werden, welches auch als Common-Rail bezeichnet wird. Das permanent unter Hochdruck stehende Druckspeichersystem verfügt über mehrere Speichereinheiten, wobei einer Speichereinheit des Druckspeichersystems ein Druckbegrenzungsventil und ein Spülventil zugeordnet ist, die typischerweise zu einem Ventilblock zusammengefasst sind. Bei einer solchen Kraftstoffversorgungsanlage sind insbesondere dem Spülventil zwei Drucksensoren zugeordnet, mit Hilfe derer redundant der im Hochdruckbereich herrschende Druck erfasst werden kann, um eine Druckregelung zu ermöglichen.

Bei aus dem Stand der Technik bekannten Kraftstoffversorgungsanlagen ist es mit Hilfe der Messsignale, die von den dem Spülventil zugeordneten Drucksensoren erfasst werden, zwar möglich, eine Druckregelung für den Hochdruckbereich der Kraftstoffversorgungsanlage zu etablieren, es ist jedoch nicht möglich, zuverlässig eine Funktionsüberprüfung der Hochdruckpumpen, die den Kraftstoff in den Hochdruckbereich fördern, durchzuführen. Dies ist insbesondere für Großmotoren der Fall, bei welchen zwischen den Hochdruckpumpen, die den Kraftstoff in den Hochdruckbereich fördern, und dem Spülventil mehrere Meter an Kraftstoffleitungen verlaufen.

Es besteht daher Bedarf an einer Kraftstoffversorgungsanlage einer Brennkraftmaschine, an einer Kraftstoffpumpe für eine Kraftstoffversorgungsanlage einer Brennkraftmaschine, an einem Verfahren zum Betreiben einer Brennkraftmaschine und an einem Motorsteuergerät zur Durchführung des Verfahrens, mit Hilfe derer mit geringem Aufwand, geringen Kosten sowie einfach und zuverlässig insbesondere eine Funktionsüberprüfung an Kraftstoffpumpen erfolgen kann.

Aus der DE 10 2012 107596 A1 ist weiterhin eine Hochdruckkraftstoffpumpe für eine Common-Rail-Kraftstoffversorgungsanlage bekannt, mit einem in einem Pumpenzylinder bewegbar geführten Pumpenkolben, und mit einem ein niederdruckseitiges Saugventil und ein hochdruckseitiges Förderventil tragenden Ventilträger. Am Ventilträger ist ein Drucksensor aufgenommen, mit Hilfe dessen Förderimpulse der Kraftstoffpumpe erfassbar sind.

Darüber hinaus zeigt die DE 10 2012 105818 A1 bereits, dass das Ausspeiseverhalten einer Hochdruckpumpe auch basierend auf dem Signal eines Drucksensors erfasst werden kann, der stromabwärts zu dem Auslassventil angeordnet ist und daher einem hochdruckseitigen Förderventil zugeordnet sein kann.

Hiervon ausgehend liegt der vorliegenden Erfindung die Aufgabe zugrunde, eine neuartige Kraftstoffversorgungsanlage und ein Verfahren zum Betreiben einer Brennkraftmaschine zu schaffen.

Diese Aufgabe wird durch eine Kraftstoffversorgungsanlage nach Anspruch 1 gelöst.

Erfindungsgemäß ist am Ventilträger jeder der parallel geschalteten Kraftstoffpumpen, insbesondere jeder der parallel geschalteten Hochdruckkraftstoffpumpen, jeweils ein Drucksensor aufgenommen, mit Hilfe dessen zumindest Förderimpulse der jeweiligen Kraftstoffpumpe erfassbar sind.

Bei der erfindungsgemäßen Kraftstoffversorgungsanlage kann mit Hilfe der von den Ventilträgern der Kraftstoffpumpen aufgenommenen Drucksensoren nicht nur eine Druckregelung für den Druckregelkreis der Kraftstoffversorgungsanlage etabliert werden, vielmehr ist darüber hinaus durch Erfassung der Förderimpulse der jeweiligen Kraftstoffpumpe eine Funktionsüberprüfung für die Kraftstoffpumpen des Druckregelkreises möglich. Sollte für eine Kraftstoffpumpe ein fehlerhafter Betrieb erkannt werden, so kann rechtzeitig eine Wartung bzw. Reparatur der jeweiligen Kraftstoffpumpe ausgelöst werden.

Weiterhin ist der von dem Ventilträger der jeweiligen Kraftstoffpumpe aufgenommene Drucksensor dem hochdruckseitigen Förderventil zugeordnet, um hochdruckseitig Förderimpulse der jeweiligen Kraftstoffpumpe zu erfassen. Diese Anordnung der Drucksensoren an den Kraftstoffpumpen ermöglicht eine sichere Funktionsüberprüfung der jeweiligen Kraftstoffpumpe.

Am Ventilträger ist von mindestens zwei parallel geschalteten Kraftstoffpumpen jeweils ein Drucksensor aufgenommen, mit Hilfe dessen die Förderimpulse und ein absoluter, hochdruckseitiger Druck an der jeweiligen Kraftstoffpumpe erfassbar sind. Der erfasste absolute Druck dient der Druckregelung. Die erfassten Förderimpulse dienen der Funktionsüberprüfung.

Die Kraftstoffversorgungsanlage weist mehr als zwei parallel geschaltete Kraftstoffpumpen auf und am Ventilträger ist von mindestens zwei parallel geschalteten Kraftstoffpumpen jeweils ein Drucksensor aufgenommen, mit Hilfe dessen die Förderimpulse und ein absoluter, hochdruckseitiger Druck an der jeweiligen Kraftstoffpumpe erfassbar sind, wobei am Ventilträger mindestens einer weiteren Kraftstoffpumpen ein Drucksensor aufgenommen ist, mit Hilfe dessen die Förderimpulse der jeweiligen Kraftstoffpumpe jedoch kein absoluter, hochdruckseitiger Druck an der jeweiligen Kraftstoffpumpe erfassbar sind.

Es kann mit ausschließlich zwei hinsichtlich der Erfassung absoluter Drücke redundanten Drucksensoren, die sowohl Förderimpulse als auch absolute, hochdruckseitige Drücke erfassen, gearbeitet werden. An der oder jeder anderen Kraftstoffpumpe kann ein Drucksensor zum Einsatz kommen, mit dem zwar die Förderimpulse an der jeweiligen Kraftstoffpumpe erfasst werden können, der jedoch nicht der Erfassung absoluter, hochdruckseitiger Druckniveaus dient.

Das Verfahren zum Betreiben dieser Brennkraftmaschine ist in Anspruch 2 definiert.

Ausführungsbeispiele der Erfindung werden, ohne hierauf beschränkt zu sein, an Hand der Zeichnung näher erläutert. Dabei zeigt:

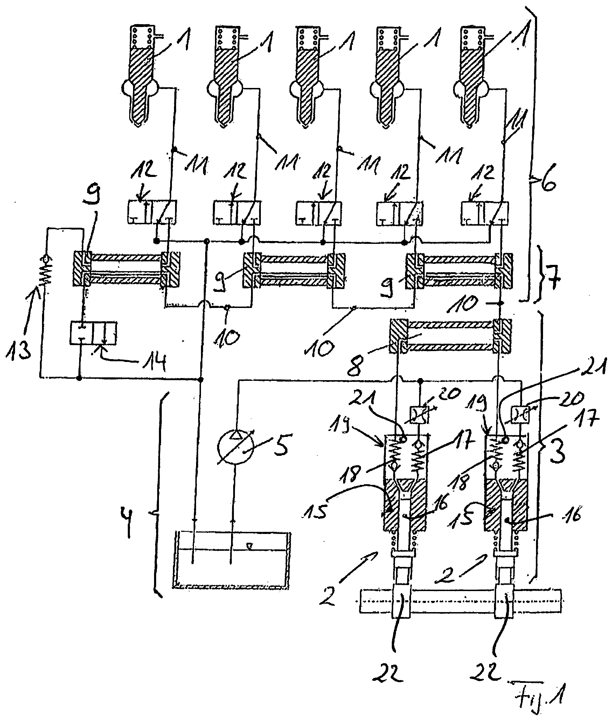

- Fig. 1:: eine schematisierte Darstellung einer Common-Rail Kraftstoffversorgungsanlage einer Brennkraftmaschine zusammen.

Fig. 1 zeigt den grundsätzlichen Aufbau einer Common-Rail Kraftstoffversorgungsanlage einer Schiffsdieselbrennkraftmaschine. So umfasst die Common-Rail Kraftstoffversorgungsanlage der Fig. 1 je Zylinder jeweils mindestens einen Injektor 1. Über die Injektoren 1 ist in jeden der Zylinder Kraftstoff einspritzbar. Die Common-Rail Kraftstoffversorgungsanlage umfasst weiterhin eine mindestens eine Niederdruckpumpe 5, mehrere Hochdruckpumpen 2 und einen Hochdruckpumpenspeicher 8 aufweisende Pumpeinrichtung 3, um Kraftstoff von einem Niederdruckbereich 4 der Common-Rail Kraftstoffversorgungsanlage in einen Hochdruckbereich 6 derselben zu fördern, wobei im Hochdruckbereich 6 zwischen der Pumpeinrichtung 3 und den Injektoren 1 ein permanent unter Hochdruck stehendes Druckspeichersystem 7 vorgesehen ist.

Das permanent unter Hochdruck stehende Druckspeichersystem 7, welches auch als Common-Rail bezeichnet wird, weist mehrere Speichereinheiten 9 auf. Die Speichereinheiten 9 sind mit der Pumpeinrichtung 3 sowie untereinander über permanent unter Hochdruck stehende Hochdruckleitungen 10 verbunden. Das Druckspeichersystem 7, nämlich die Speichereinheiten 9, sind weiterhin über abhängig vom Einspritztakt zeitweise unter Hochdruck stehende Hochdruckleitungen 11 mit den Injektoren 1 verbunden. Den abhängig vom Einspritztakt zeitweise unter Hochdruck stehenden Hochdruckleitungen 11, welche die Injektoren 1 mit den Speichereinheiten 9 verbinden, sind Schaltventile 12 zugeordnet, die abhängig vom Einspritztakt den Injektoren 1 Kraftstoff zuleiten. Einer der Speichereinheiten 9 des Druckspeichersystems 7 ist ein Druckbegrenzungsventil 13 und ein Spülventil 14 zugeordnet. Der Hochdruckbereich 6 bildet einen Druckregelkreis der Kraftstoffversorgungsanlage. Die Hochdruckpumpen 2 sind in diesem Druckregelkreis parallel geschaltet.

Jede der Hochdruckpumpen 2 verfügt über einen in einem Pumpenzylinder 15 geführten Pumpenkolben 16, wobei jeder der Pumpenkolben 16 über eine Antriebsnocke 22 gesteuert im Pumpenzylinder 15 auf und ab bewegt wird, um Kraftstoff aus dem Niederdruckbereich der Common-Rail Kraftstoffversorgungsanlage in den Hochdruckbereich derselben zu fördern. Hierzu umfasst jede Hochdrucckraftstoffpumpe 2 weiterhin ein Saugventil 17 und ein Förderventil 18, die in einem Ventilträger 19 der jeweiligen Hochdruckkraftstoffpumpe 2 aufgenommen sind. Die Saugventile 17 sind zwischen dem Niederdruckbereich und die jeweilige Hochdruckkraftstoffpumpe 2 geschaltet, wohingegen die Förderventile 18 zwischen den Hochdruckbereich und die jeweilige Hochdruckkraftstoffpumpe 2 geschaltet sind. Wie Fig. 1 entnommen werden kann, wirkt mit jeder Hochdruckkraftstoffpumpe 2 weiterhin ein Drosselventil 20 zusammen, über welches die Fördermenge der jeweiligen Hochdruckkraftstoffpumpe 2 eingestellt werden kann. Das jeweilige Drosselventil 20 kann ebenso wie das jeweilige Saugventil 17 und das jeweilige Förderventil 18 vom Ventilträger 19 der jeweiligen Hochdruckkraftstoffpumpe 2 aufgenommen sein.

Im Sinne der hier vorliegenden Erfindung ist am Ventilträger 19 jeder der Hochdruckkraftstoffpumpen 2 jeweils ein Drucksensor 21 aufgenommen, mit Hilfe desser Förderimpulse der jeweiligen Kraftstoffpumpe 2 erfassbar sind. Der von dem Ventilträger 19 der jeweiligen Kraftstoffpumpe 2 aufgenommene Drucksensor 21 ist dabei dem hochdruckseitigen Förderventil 18 zugeordnet, um so die Förderimpulse der jeweiligen Kraftstoffpumpe 2 hochdruckseitig zu erfassen.

In der gezeigten Konfiguration der Fig. 1 umfasst die Kraftstoffversorgungsanlage zwei parallel geschaltete Hochdruckkraftstoffpumpen 2 wobei jeder dieser Hochdruckkraftstoffpumpen 2 einem Drucksensor 21 zugeordnet ist, nämlich derart, dass der jeweilige Drucksensor 21 am Ventilträger 19 angreift, nämlich im Bereich des jeweiligen hochdruckseitigen Förderventils 18. Dabei sind die Drucksensoren 21 derart ausgestaltet, dass mit denselben nicht nur die Förderimpulse der jeweiligen Hochdruckkraftstoffpumpe 2 erfasst werden können, sondern ferner ein absoluter hochdruckseitiger Druck an der jeweiligen Hochdruckkraftstoffpumpe, welcher dem Druck des Hochdruckbereichs 6 entspricht.

Hiermit kann dann nicht nur an jeder Hochdruckkraftstoffpumpe 2 über die erfassten Förderimpulse eine individuelle, sichere und zuverlässige Funktionsüberprüfung für die jeweilige Hochdruckkraftstoffpumpe 2 durchgeführt werden, vielmehr kann darüber hinaus das von den Drucksensoren 21 erfasste Signal über den absoluten hochdruckseitigen Druck für eine Druckregelung des Hochdruckbereichs 6 genutzt werden.

Dabei sind in der Konfiguration der Fig. 1 die den beiden Hochdruckkraftstoffpumpen 2 zugeordneten Drucksensoren 21 hinsichtlich der Erfassung des absoluten, hochdruckseitigen Drucks redundant, so dass dann, wenn einer der Drucksensoren 21 ausfallen sollte, immer noch eine Druckregelung für den Hochdruckbereich 6 der Common-Rail Kraftstoffversorgungsanlage gewährleistet werden kann.

Da das Kraftstoffversorgungssystem mehr als zwei parallel geschaltete Hochdruckkraftstoffpumpen 2 umfasst, ist mindestens zwei, insbesondere ausschließlich zwei, der parallel geschalteten Hochdruckkraftstoffpumpen 2 jeweils ein derartiger Drucksensor 21 zugeordnet, mit Hilfe dessen an der jeweiligen Hochdrucckraftstoffpumpe 2 einerseits die Förderimpulse derselben und andererseits der absolute, hochdruckseitige Druck erfasst werden können.

Der oder jeder weiteren Hochdruckkraftstoffpumpe 2 ist ein Drucksensor zugeordnet, mit Hilfe dessen zwar die Förderimpulse der jeweiligen Hochdruckkraftstoffpumpe erfasst werden können, um an der jeweiligen Hochdruckkraftstoffpumpe eine Funktionsüberprüfung durchführen zu können, mit Hilfe dessen jedoch kein absoluter, hochdruckseitiger Druck erfasst werden kann. Dies ist aus Kostengründen von Vorteil.

Die Erfindung betrifft weiterhin ein Verfahren zum Betreiben einer Brennkraftmaschine mit einer Kraftstoffversorgungsanlage, wobei aus den mit den Drucksensoren 21 an den Kraftstoffpumpen 2 erfassten Förderimpulsen eine Funktionsüberprüfung für die Kraftstoffpumpen 2 durchgeführt werden kann. Hierzu werden über die Drucksensoren 21 an der jeweiligen Kraftstoffpumpe 2 erfasste Ist-Förderimpulse mit Soll-Förderimpulsen verglichen, wobei dann, wenn eine Abweichung zwischen den Ist-Förderimpulsen und den Soll-Förderimpulsen größer als ein Grenzwert ist, auf eine defekte Kraftstoffpumpe 2 geschlossen wird. Die von den Drucksensoren 21 erfassten absoluten Drücke dienen als Sollwerte einer Druckregelung.

Bei den hardwareseitigen Mitteln zur Durchführung dieses Verfahrens handelt es sich um Datenschnittstellen, um einen Prozessor und um einen Speicher. Die Datenschnittstellen dienen dem Datenaustausch mit der an der Durchführung des erfindungsgemäßen Verfahrens beteiligten Baugruppen, insbesondere mit den Drucksensoren 21. Der Datenspeicher dient der Speicherung und der Prozessor der Verarbeitung von Daten. Ebenso dienen die softwareseitige Mittel der Verarbeitung und Auswertung der von den Drucksensoren 21 erfassten Signale.

Mit der hier vorliegenden Erfindung wird demnach eine Kraftstoffversorgungsanlage vorgeschlagen, insbesondere eine Common-Rail Kraftstoffversorgungsanlage, bei welcher parallel geschalteten Kraftstoffpumpen, insbesondere parallel geschalteten Hochdruckkraftstoffpumpen 2, unmittelbar Drucksensoren 21 zugeordnet sind, nämlich derart, dass die Drucksensoren 21 am Ventilträger 19 der jeweiligen Kraftstoffpumpe 2 aufgenommen sind.

An mindestens zwei parallel geschalteten Kraftstoffpumpen 2 sind Drucksensoren 21 angeordnet, mit Hilfe derer einerseits Förderimpulse und anderseits absolute Drücke messtechnisch erfasst werden können. Durch Auswertung von erfassten Förderimpulsen kann für die jeweilige Kraftstoffpumpe 2 eine Funktionsüberprüfung etabliert werden. Durch die Auswertung der absoluten Drücke kann für die Kraftstoffversorgungsanlage, insbesondere für eine Druckspeichersystem derselben, eine Druckregelung gewährleistet werden.

Die Erfindung erlaubt mit minimalem Aufwand einerseits eine Druckregelung an einer Kraftstoffversorgungsanlage und andererseits eine einfache und zuverlässige Funktionsüberprüfung für die parallel geschalteten Kraftstoffpumpen der Kraftstoffversorgungsanlage. Drucksensoren, die nach dem Stand der Technik dem Spülventil zugeordnet sind, können entfallen. Durch die Funktionsüberprüfung der Kraftstoffpumpen kann erkannt werden, ob z.B. an einer Kraftstoffpumpe ein Kolbenfresser vorliegt oder bevorsteht. Es kann dann eine Wartung an der Kraftstoffpumpe ausgelöst werden.

### Bezugszeichenliste

- 1: Injektor
- 2: Hochdruckpumpe
- 3: Pumpeinrichtung
- 4: Niederdruckbereich
- 5: Niederdruckpumpe
- 6: Hochdruckbereich
- 7: Druckspeichersystem
- 8: Hochdruckpumpenspeicher
- 9: Speichereinheit
- 10: Hochdruckleitung
- 11: Hochdruckleitung
- 12: Schaltventil
- 13: Druckbegrenzungsventil
- 14: Spülventil
- 15: Pumpenzylinder
- 16: Pumpenkolben
- 17: Saugventil
- 18: Förderventil
- 19: Ventilträger
- 20: Drosselventil
- 21: Drucksensor

## Patentansprüche

1. Kraftstoffversorgungsanlage einer Brennkraftmaschine, insbesondere Common-Rail Kraftstoffversorgungsanlage einer mit Schweröl betriebenen Schiffsdieselbrennkraftmaschine, mit mehr als zwei in einem Druckregelkreis parallel geschalteten Kraftstoffpumpen, insbesondere Hochdruckkraftstoffpumpen (2), wobei jede der Kraftstoffpumpen einen in einem Pumpenzylinder (15) bewegbar geführten Pumpenkolben (16) und einen ein niederdruckseitiges Saugventil (17) und ein hochdruckseitiges Förderventil (18) tragenden Ventilträger (19) aufweist, **dadurch gekennzeichnet, dass** am Ventilträger (19) jeder der parallel geschalteten Kraftstoffpumpen (2) jeweils ein Drucksensor (21) aufgenommen ist, mit Hilfe dessen zumindest Förderimpulse der jeweiligen Kraftstoffpumpe erfassbar sind, wobei der von dem Ventilträger (19) der jeweiligen Kraftstoffpumpe aufgenommene Drucksensor (21) dem hochdruckseitigen Förderventil (18) zugeordnet ist, um hochdruckseitig Förderimpulse der jeweiligen Kraftstoffpumpe zu erfassen, und am Ventilträger (19) von mindestens zwei parallel geschalteten Kraftstoffpumpen jeweils ein Drucksensor (21) aufgenommen ist, mit Hilfe dessen die Förderimpulse der jeweiligen Kraftstoffpumpe und ferner ein absoluter, hochdruckseitiger Druck an der jeweiligen Kraftstoffpumpe erfassbar sind, **wobei** am Ventilträger (19) von mindestens zwei parallel geschalteten Kraftstoffpumpen jeweils ein Drucksensor (21) aufgenommen ist, mit Hilfe dessen die Förderimpulse der jeweiligen Kraftstoffpumpe und ferner ein absoluter, hochdruckseitiger Druck an der jeweiligen Kraftstoffpumpe erfassbar sind, wobei am Ventilträger (19) mindestens einer weiteren Kraftstoffpumpe ein Drucksensor (21) aufgenommen ist, mit Hilfe dessen die Förderimpulse der jeweiligen Kraftstoffpumpe jedoch kein absoluter, hochdruckseitiger Druck an der jeweiligen Kraftstoffpumpe erfassbar sind.

2. Verfahren zum Betreiben einer Brennkraftmaschine mit einer Kraftstoffversorgungsanlage nach Anspruch 1, **dadurch gekennzeichnet, dass** aus den mit den Drucksensoren an den Kraftstoffpumpen erfassten Förderimpulsen eine Funktionsüberprüfung der Kraftstoffpumpen durchgeführt wird und dass Ist-Förderimpulse mit Soll-Förderimpulsen verglichen werden, und dass dann, wenn eine Abweichung zwischen den Ist-Förderimpulsen und den Soll-Förderimpulsen größer als ein Grenzwert ist, auf eine defekte Kraftstoffpumpe geschlossen wird.

## Claims

1. A fuel supply system of an internal combustion engine, in particular common rail fuel supply system of a marine diesel internal combustion engine operated with heavy fuel oil, having more than two fuel pumps connected in parallel in a pressure regulating circuit, in particular high-pressure fuel pumps (2), wherein each of the fuel pumps comprises a pump piston (16) that is movably guided in a pump cylinder (15) and a valve support (19) carrying a low-pressure-side suction valve (17) and a high-pressure-side delivery valve (18), **characterized in that** on the valve support (19) of each of the fuel pumps (2) connected in parallel a pressure sensor (21) each is received, with the help of which at least delivery impulses of the respective fuel pump are detectable, wherein the pressure sensor (21) received by the valve support (19) of the respective fuel pump is assigned to the high-pressure-side delivery valve (18) in order to detect delivery impulses of the respective fuel pump on the high-pressure side, and on the valve support (19) of at least two fuel pumps connected in parallel a pressure sensor (21) each each is received, with the help of which the delivery impulses of the respective pump and, further, an absolute pressure on the respective fuel pump on the high-pressure side are detectable, **wherein** on the valve support (19) of at least two fuel pumps connected in parallel a pressure sensor (21) each is received, with the help of which the delivery impulses of the respective fuel pump and, further, an absolute pressure on the respective fuel pump on the high-pressure side are detectable, **wherein** on the valve support (19) of at least one further fuel pump a pressure sensor (21) is received, with the help of which the delivery impulses of the respective fuel pump but no absolute pressure on the respective fuel pump on the high-pressure side are detectable.

2. A method for operating on internal combustion engine having a fuel supply system according to Claim 1, **characterized in that** from the delivery impulses detected with the pressure sensors on the fuel pumps a function check of the fuel pumps is carried out and **in that** actual delivery impulses are compared with set-point delivery impulses and **in that** in particular when a deviation between the actual delivery impulses and the set-point delivery impulses is greater than a limit value, a defective fuel pump is concluded.

## Revendications

1. Dispositif d'alimentation en carburant d'un moteur à combustion interne, notamment dispositif d'alimentation en carburant à rail commun d'un moteur diesel de navire fonctionnant au pétrole brut, comportant plus de deux pompes à carburant branchées en parallèle dans un circuit de régulation de pression, notamment des pompes à carburant à haute pression (2), dans lequel chacune des pompes à carburant présente un piston de pompe (16) guidé de manière mobile dans un cylindre de pompe (15) et un support de soupape (19) supportant une soupape d'aspiration du côté à basse pression (17) et une vanne de refoulement du côté à haute pression (18), **caractérisé en ce que** sur le support de soupape (19) de chacune des pompes à carburant (2) branchées en parallèle, un capteur de pression (21) est respectivement renfermé, à l'aide duquel au moins des impulsions de refoulement de la pompe à carburant respective peuvent être détectées, dans lequel le capteur de pression (21) renfermé par le support de soupape (19) de la pompe à carburant respective est coordonné à la soupape de refoulement du côté à haute pression (18), afin de détecter des impulsions de refoulement du côté à haute pression de la pompe à carburant respective, et sur le support de soupape (19) d'au moins deux pompes à carburant branchées en parallèle un capteur de pression (21) est respectivement renfermé, à l'aide duquel les impulsions de refoulement de la pompe à carburant respective et en outre une pression absolue, du côté à haute pression peuvent être détectées sur la pompe à carburant respective, dans lequel sur le support de soupape (19) d'au moins deux pompes à carburant branchées en parallèle respectivement un capteur de pression (21) est renfermé, à l'aide duquel les impulsions de refoulement de la pompe à carburant respective et en outre une valeur absolue, du côté à haute pression peuvent être détectées sur la pompe à carburant respective, dans lequel sur le support de soupape (19) d'au moins une pompe à carburant supplémentaire un capteur de pression (21) est renfermé, à l'aide duquel les impulsions de refoulement de la pompe à carburant respective et néanmoins aucune pression absolue, du côté à haute pression ne peuvent être détectées sur la pompe à carburant respective.

2. Procédé de fonctionnement d'un moteur à combustion interne comportant une installation d'alimentation en carburant selon la revendication 1, **caractérisé en ce que** à partir des impulsions de refoulement détectées par les capteurs de pression sur les pompes à carburant un contrôle de fonctionnement des pompes à carburant est effectué et **en ce que** des impulsions de refoulement effectives sont comparées avec des impulsions de refoulement de consigne, et **en ce que** ensuite, lorsqu'un écart entre les impulsions de refoulement effectives et les impulsions de refoulement de consigne est supérieur à une valeur seuil, il est conclu à une panne de pompe à carburant.
